# FASCICULE DE BREVET EUROPEEN

(11) **EP 2 595 859 B1**
(45) Date de publication et mention de la délivrance du brevet: **25.02.2015**
(21) Numéro de dépôt: 11741659.4
(22) Date de dépôt: 12.07.2011
(51) Int. Cl.: B62D 25/20, B60R 22/22, B60N 2/01

(54) **CHASSIS AVEC CAISSON DE REHAUSSE POUR ANCRAGE DE SIEGES PASSAGERS**
FAHRZEUGCHASSIS MIT AUFGESETZTER HOHLSTRUKTUR ZUR VERANKERUNG VON MITFAHRERSITZEN
CAR FRAME WITH ELEVATED BOX FOR ATTACHING THE PASSENGER SEATS

(30) Priorité: 23.07.2010 FR 1056046
(43) Date de publication de la demande: 29.05.2013
(73) Titulaire: Renault S.A.S., 92100 Boulogne-Billancourt (FR)
(72) Inventeur: BISROR, Olivier, F-92350 Le Plessis Robinson (FR); MAUDUIT, Thomas, F-78960 Voisins Le Bretonneux (FR); TABUTEAU, Pascal, F-78180 Montigny le Bretonneux (FR)
(86) Numéro de dépôt international: PCT/FR2011/051653
(87) Numéro de publication internationale: WO 2012/010775

(56) Documents cités:
- EP-B1- 0 035 739
- WO-A1-2009/098993
- JP-A- 7 156 826
- JP-A- 8 169 245
- JP-A- 55 127 263

## Description

L'invention se situe dans le domaine des châssis pour véhicule automobile, notamment des véhicules à propulsion électrique ou hybride. Afin d'assurer une autonomie suffisante aux véhicules à propulsion électrique ou hybride, des batteries d'accumulateur doivent être embarquées. Le volume de ces batteries est sensiblement plus important que celui occupé par un réservoir d'énergie traditionnelle comme par exemple un réservoir d'essence.

Une solution consiste à exploiter un volume délimité sous le siège des passagers, en modifiant le profil du plancher de manière à isoler ce volume de l'habitacle. Le siège des passagers repose alors directement sur une zone surélevée du plancher. La hauteur du siège peut être la même que la hauteur du siège dans des véhicules de la même gamme construits pour être propulsés par un moteur thermique, ou peut être plus élevée.

La demande de brevet JP 07 156 826 décrit ainsi une structure de châssis pour véhicule automobile à propulsion électrique, dans laquelle un volume sous les sièges des passagers avant et arrière est réservé pour la batterie en séparant ce volume de l'habitacle. Des plaques de rehausse verticales sont placées à l'avant et à l'arrière des sièges formant une poutre creuse disposée sur une traverse centrale arrière. Une zone d'assise de plancher surélevée s'étend d'avant en arrière entre ces plaques de rehausse verticales, et s'étend latéralement entre des supports de rehausse latéraux fixés aux flancs latéraux de la carrosserie.

Une telle structure n'est pas applicable à un véhicule à trois portes puisqu'il faut que les sièges des passagers arrière soient bordés par des flancs fixes de carrosserie, auxquels les supports de rehausse latéraux sont assemblés. En outre, dans le cas où l'on souhaite décliner un même véhicule dans un modèle à propulsion électrique et dans un modèle à propulsion par moteur thermique, la ligne de points de soudure permettant d'assembler les éléments de plancher aux longerons du véhicule ne peut pas avoir la même géométrie pour le véhicule électrique et pour le véhicule thermique. On est alors obligé de mettre en place, pour la production des deux véhicules, deux lignes de soudage distinctes, ce qui renchérit à la fois les coûts de développement et de production.

Enfin, en surélevant la zone d'assise des sièges, on est amené à déplacer les ferrures de sièges arrière et le point d'ancrage des ceintures de sécurité associées. Ces ferrures et ces points d'ancrage sont traditionnellement arrimés à une traverse arrière porteuse. En surélevant les assises de siège, on tend donc à déplacer les ferrures et points d'ancrages vers une structure de rehausse rapportée, qui est, pour des raisons de poids maximal à respecter, généralement moins rigide que la traverse arrière.

L'invention a pour but de proposer une géométrie de châssis pour véhicule électrique ou pour un autre véhicule nécessitant un volume de réservoir d'énergie élevé, qui permette de produire en parallèle des véhicules à propulsion électrique et des véhicules à propulsion par moteur thermique en utilisant un grand nombre de composants et de moyens de production communs.

L'invention a également pour but de proposer une structure de châssis à plancher surélevé, permettant un arrimage solide des ferrures de sièges et des points d'ancrage des ceintures de sécurité.

A cet effet, un châssis de véhicule automobile comporte une traverse centrale arrière. Il comporte également une partie support d'assise de plancher munie de ferrures de sièges arrières et supportée à l'arrière par la traverse centrale arrière. Le châssis comporte en outre une poutre creuse disposée par-dessus la traverse centrale arrière le long de cette traverse centrale arrière, ladite poutre comportant une pièce de rehausse arrière. La pièce de rehausse arrière comprend une plaque horizontale fixée sur la traverse centrale arrière, et éventuellement une plaque verticale de rehausse, la plaque verticale et la plaque horizontale étant par exemple réalisées dans une même tôle, pliée le long d'une arête commune aux deux plaques. La poutre creuse comporte une tôle de fermeture fixée à son tour sur la plaque horizontale et, comporte au moins un renfort d'ancrage assemblé à l'intérieur de la poutre creuse, le renfort formant un caisson creux et reliant la pièce de rehausse arrière et la tôle de fermeture. Une face supérieure du renfort d'ancrage supporte une pièce de fixation, ladite pièce de fixation étant en outre assemblée, du côté extérieur de la poutre creuse, à la pièce de rehausse arrière, par exemple à la plaque verticale de la pièce de rehausse arrière

De manière préférentielle, le renfort d'ancrage relie une plaque verticale de la pièce de rehausse arrière, et une partie, elle aussi verticale, de la tôle de fermeture. Le renfort d'ancrage peut en outre être fixé sur la plaque horizontale de la pièce de rehausse arrière.

Selon un mode de réalisation préféré, une face du renfort d'ancrage affleure au voisinage de la partie support d'assise du plancher.

Avantageusement, le caisson creux est délimité par une face appartenant à la tôle de fermeture, par deux faces appartenant à la pièce de rehausse arrière, et par trois faces formées par une tôle pliée en U assemblée à l'intérieur de la poutre creuse.

Une ferrure de siège arrière est ancrée sur une pièce de fixation solidaire du renfort d'ancrage.

De manière préférentielle, le châssis comporte au moins deux renforts d'ancrage, et des pièces d'ancrage de ceintures de sécurité sont ancrées sur les pièces de fixation.

La distance entre les centres des deux caissons peut par exemple être comprise entre 30cm et 60cm.

Selon un mode réalisation préférentiel, chaque pièce de fixation comporte un volume creux assemblé sur la face extérieure de la plaque verticale de la pièce de rehausse arrière, et se prolonge par une portée plane assemblée à une partie arrière du support d'assise, au niveau d'un renfort d'ancrage. (La face extérieure désigne ici la face extérieure de la poutre creuse.)

La tôle de fermeture comporte par exemple une surface verticale parallèle à la plaque verticale de la pièce de rehausse arrière, et peut également comporter deux surfaces verticales latérales repliées à partir de cette surface verticale et assemblées à la plaque verticale de rehausse arrière, le long des côtés de celle-ci.

Selon un mode de réalisation préféré, le châssis comporte deux longerons reliés par la traverse centrale arrière et recouverts, à l'avant de la traverse, par des renforts latéraux de plancher. Sur ces renforts latéraux est fixé un renfort transversal et deux pièces de rehausse latérales. La partie support d'assise du plancher est fixée par-dessus les deux pièces de rehausse latérales, la pièce de rehausse arrière précitée et le renfort transversal, de façon à créer sous la partie support d'assise du plancher, un logement pour un réservoir d'énergie.

Avantageusement, une portion, en forme de bande, de la plaque horizontale de la pièce de rehausse arrière, dépasse vers l'arrière du véhicule par rapport à la tôle de fermeture et par rapport à la traverse centrale arrière. Ainsi, on peut venir fixer une plaque de plancher arrière sur l'arrière des deux longerons et sur la bordure arrière de la pièce de rehausse arrière, en effectuant un soudage de deux épaisseurs de tôle seulement.

Avantageusement, la pièce de rehausse arrière et le renfort transversal s'étendent uniquement entre les côtés internes des deux renforts latéraux de plancher. Les parois délimitant le volume dédié au réservoir d'énergie, sont ainsi indépendantes de la carrosserie extérieure et des ouvrants du véhicule.

La présente invention sera mieux comprise à la lecture de la description détaillée de quelques modes de réalisation pris à titre d'exemples nullement limitatifs, et illustrés par les dessins annexés, sur lesquels :
- la figure 1 est une vue schématique en perspective en coupe partielle selon I-I de la figure 3 d'une portion de châssis selon l'invention,
- la figure 2 est une vue schématique en perspective de quelques éléments constitutifs du châssis de la figure 1,
- la figure 3 est une vue schématique en perspective de quelques autres éléments constitutifs du châssis de la figure 1,
- la figure 4 est une vue en perspective éclatée d'une partie arrière pré assemblée du châssis des figures 1 à 3.

On notera que les proportions respectives des vues schématiques des différentes figures ne correspondent pas obligatoirement, ces vues schématiques ayant uniquement pour objet d'illustrer certains aspects de l'invention.

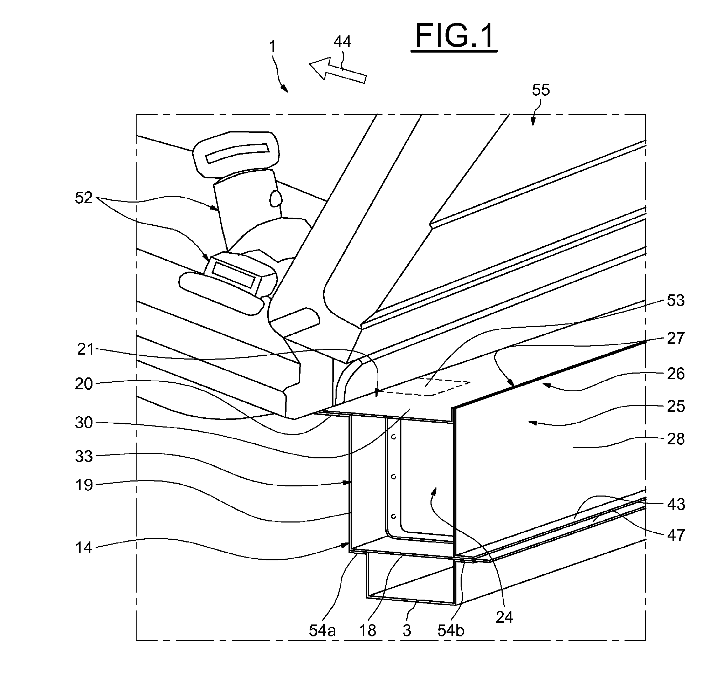

La flèche 44 indique à chaque fois sur les figures 1 à 4 la direction avant du véhicule (non représenté).

Tel qu'illustré sur la figure 1, un châssis 1 comporte une partie support d'assise 21 de plancher sur laquelle est assemblée une banquette 55 de siège de passager arrière. A l'arrière de la banquette de siège 55, la partie 21 de support d'assise est soutenue par une traverse centrale arrière 3 reliant deux longerons 2 du véhicule (non représenté). La traverse centrale arrière 3 est une poutre de section en U, la section en U étant ouverte vers le haut et bordée latéralement par deux rebords horizontaux 54a et 54b. La profondeur de la section en U peut être constante ou variable, de manière cependant à ce que ses deux rebords 54a et 54b restent plans.

Selon l'invention, une poutre creuse 33 est disposée par-dessus la traverse arrière 3, à laquelle elle est assemblée par soudage le long des rebords 54a, 54b. Cette poutre creuse 33 soutient une partie arrière 30 de la partie 21 de support d'assise du plancher. Les parois de la poutre creuse 33 sont constituées par une pièce de rehausse arrière 14, une tôle de fermeture 25 et par la partie arrière 30. Ces trois pièces en tôle sont soudées entre elles le long de lignes de soudure transversales au véhicule. Une première tôle est la partie arrière horizontale 30 de la partie 21 de support d'assise. Les deux autres tôles, assemblées sous la première, sont :
- une pièce 14 de rehausse arrière, constituée par une tôle pliée de manière à former une plaque verticale 19 placée sensiblement au dessus du rebord horizontal 54a de la traverse arrière 3, et une plaque horizontale 18 soudée à la traverse arrière 3 le long des rebords 54a et 54b; la pièce de rehausse arrière 14 comprend un rebord horizontal supérieur 20, le long duquel elle est assemblée par soudage sous la partie arrière 30 de la zone support d'assise 21, à distance de l'extrémité arrière de cette zone de support d'assise ;
- une tôle de fermeture 25 comprenant une surface verticale 28, disposée parallèlement à la plaque 19, sensiblement au dessus du rebord 54b de la traverse arrière 3, et assemblée par soudure le long de son bord supérieur 26, à un rebord vertical d'extrémité 27 de la partie arrière 30 de la pièce support d'assise 21. La tôle de fermeture 25 comprend un rebord horizontal inférieur 43 tourné vers l'extérieur de la poutre creuse 33, c'est à dire vers l'arrière du véhicule. Par le rebord 43, la tôle de fermeture 25 est assemblée par soudage en trois épaisseurs, à la fois à la plaque horizontale 18 de la pièce 14 de rehausse arrière, et au rebord 54b de la traverse arrière 3.

La face supérieure de la poutre creuse 33 est fermée par la partie arrière horizontale 30 de la pièce support d'assise 21. Cette partie arrière 30 est assemblée par au moins une ligne de soudage longeant le rebord 20 de la tôle 14 de rehausse arrière, et par une ligne de soudage parallèle longeant le rebord d'extrémité 27 de la partie arrière 30.

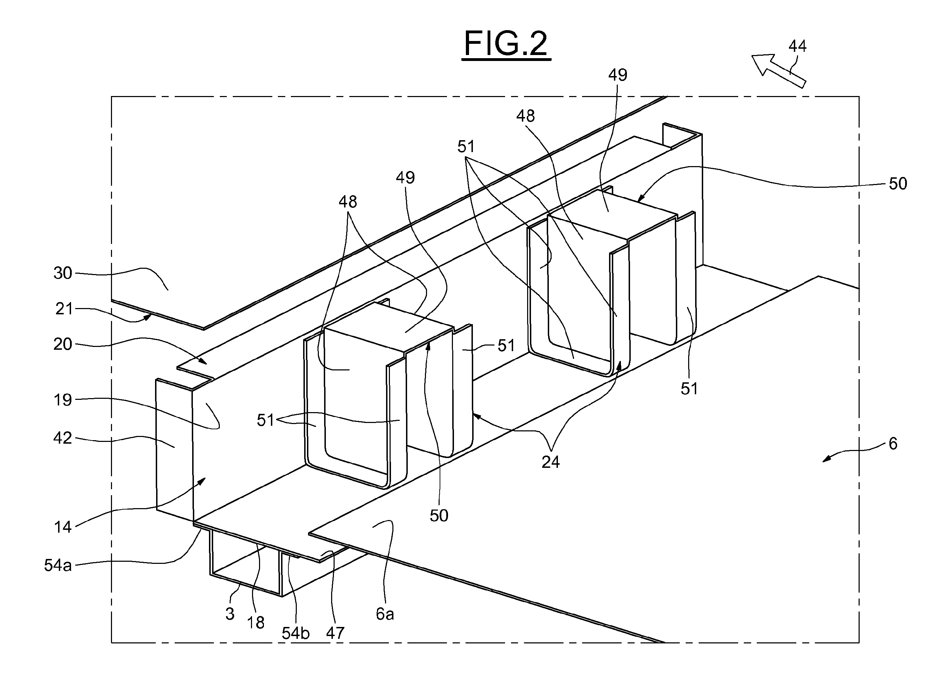

La plaque horizontale 18 de la pièce de rehausse arrière 14 déborde vers l'arrière du véhicule par rapport au rebord 43 de la tôle de fermeture 25, et déborde par rapport au rebord 54b de la traverse centrale arrière 3. Une bande arrière 47 de la plaque horizontale 18 est ainsi disponible pour être superposée avec un bord avant d'une plaque 6 de plancher arrière (comme on le voit sur la figure 2) et être assemblée par soudage avec cette plaque de plancher arrière 6.

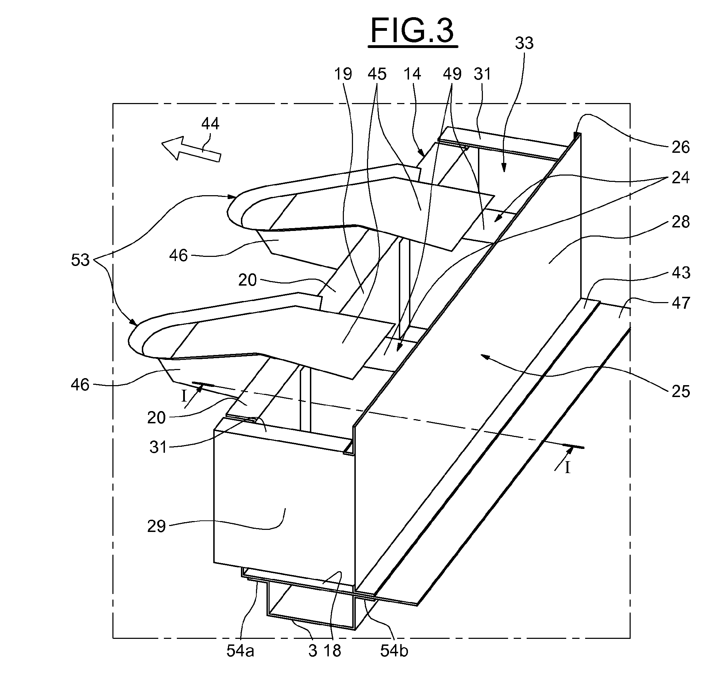

A l'intérieur de la poutre creuse 33, sont assemblés deux renforts d'ancrage 24 (un seul est représenté sur la figure 1) en forme de caisson dont les parois verticales 48 s'étendent chacune sur toute la hauteur et sur toute la largeur (i.e. dans la direction avant-arrière du véhicule) de la section transversale intérieure de la poutre creuse 33. Au niveau de la face supérieure 49 de chaque renfort 24, est assemblée une pièce de fixation 53 visible sur les figures 1 et 3, à laquelle sont assemblées les ferrures de siège (non représentées) et les pièces d'ancrage (non représentées) des ceintures de sécurité 52. On obtient ainsi une liaison rigide des pièces de fixation 53, capable de supporter les efforts pouvant s'exercer sur les pièces 53 en cas de choc frontal ou arrière sur le véhicule, ces efforts étant transmis à la traverse centrale arrière 3 par cet assemblage rigide.

De manière préférentielle, pour un véhicule ayant trois places passagers à l'arrière, la poutre creuse 33 peut comporter deux renforts d'ancrage 24, de manière à pouvoir attacher à chacun de ces renforts, les pièces d'ancrage des ceintures de sécurité d'un siège central et d'un siège latéral. On comprendra aisément qu'un nombre différent de renforts d'ancrage pourrait être envisagé, par exemple un seul renfort central, notamment dans le cas d'un véhicule n'offrant que deux places passagers à l'arrière, ou trois renforts ou quatre renforts, certains des renforts n'étant alors pas utilisés pour fixer des pièces d'ancrage de ceinture.

La figure 2 est une vue en perspective d'une partie avant de la poutre creuse 33, assemblée sur la traverse centrale arrière 3. On retrouve sur la figure 2 des éléments communs à la figure 1, les mêmes éléments étant alors désignés par les mêmes références. On retrouve notamment sur la figure 2, la tôle de rehausse arrière 14, qui comprend la plaque verticale 19, et la plaque horizontale 18 assemblée à la traverse centrale arrière 3 le long des rebords 54a et 54b de la traverse 3.

Il est à noter que l'assemblage entre la pièce de rehausse arrière 14 et la traverse centrale arrière 3, ainsi que les assemblages entre les autres tôles du châssis, peut se faire de manière préférentielle par soudage par points, ou suivant une ligne continue, ou suivant tout autre procédé d'assemblage, par exemple par collage ou rivetage.

La plaque verticale 19 est longée le long de son bord supérieur par le rebord horizontal 20 permettant de l'assembler par soudage à la partie arrière 30 de la partie 21 de support d'assise. La plaque verticale 19 est également longée le long de ses bords verticaux par deux rebords 42 rabattus vers l'avant du véhicule, de manière à se trouver dans un plan parallèle à l'axe longitudinal du véhicule.

La plaque horizontale 18 est en surplomb au-delà du rebord 54b de la traverse centrale arrière 3. Ainsi, il est possible de venir superposer à l'arrière de la plaque horizontale 18, une extrémité avant 6a de la plaque de plancher arrière 6, sans que celle-ci soit en interférence avec l'épaisseur du rebord 54b de la traverse centrale arrière 3. Une soudure en deux épaisseurs est alors possible entre la plaque horizontale 18 et la plaque de plancher arrière 6.

A l'intérieur du dièdre formé par la plaque verticale 19 et la plaque horizontale 18, sont assemblés les deux caissons des renforts d'ancrage 24, dont l'espacement mutuel correspond sensiblement à l'espacement entre deux points d'ancrage de ceintures de sécurité pour passagers arrière du véhicule. Chaque renfort d'ancrage 24 est obtenu en assemblant une tôle 50, pliée de manière à comporter trois volets disposés en U, à l'intérieur du dièdre formé par la pièce de rehausse arrière 14. La tôle 50 est positionnée de manière à ce que la face de base 49 du U relie les bords supérieurs de la plaque verticale 19 de la pièce de rehausse arrière 14, et de la surface verticale 28 de la tôle de fermeture 25 (figures 1 et 3).

Les extrémités de la tôle 50 opposées à la face 49 du U sont assemblées à la plaque horizontale 18 de la pièce de rehausse arrière 14. Les quatre bords verticaux des parois verticales 48 du U sont assemblés, soit à la plaque verticale 19, soit à la surface verticale 28 visible sur les figures 1 et 3. On obtient ainsi des renforts d'ancrage 24 sous la forme de caissons constitués par les trois faces d'une tôle 50, une portion de plaque verticale 19 de la pièce de rehausse arrière 14, une portion de plaque horizontale 18 de la pièce de rehausse arrière 14, et une portion de surface verticale 28 de la tôle de fermeture 25 (visible sur les figures 1 et 3). Les caissons des renforts 24 en forme de parallélépipède rigide, résistent efficacement aux déformations en torsion, aussi bien dans un plan horizontal que dans tout plan vertical.

L'assemblage des parois verticales 48 des tôles 50 peut se faire au moyen de bandes d'assemblage 51 perpendiculaires aux parois 48, obtenu soit par pliage, soit par emboutissage de la tôle 50. Un mode préférentiel de réalisation consiste à obtenir les bandes d'assemblage 51 par emboutissage de la tôle 50 de manière à ce que chaque paroi 48 soit longée le long de trois côtés consécutifs par une même bande d'assemblage 51, ce qui améliore encore la rigidité de l'assemblage final.

La figure 3 est une autre vue, en perspective, de la poutre creuse 33 des figures 1 et 2, avant assemblage de la zone support d'assise 21. La figure 3 laisse voir plus précisément les pièces de fixation 53 de la figure 1, ainsi que certains détails de la tôle de fermeture 25. On notera que les pièces de fixation 53 sont, en réalité, rapportées sur la partie support d'assise 21 non représentée sur la figure 3. La figure 3 permet ainsi seulement de visualiser les emplacements de ces pièces de fixation 53 par rapport aux caissons des renforts d'ancrage 24. On retrouve sur la figure 3 des éléments communs aux figures 1 et 2, les mêmes éléments étant alors désignés par les mêmes références. La figure 3 montre notamment l'agencement entre la pièce de rehausse arrière 14, les renforts d'ancrage 24, et la tôle de fermeture arrière 25 ainsi que la position des pièces de fixation 53.

La tôle de fermeture 25 est soudée, par sa surface verticale 28, aux bandes d'assemblage 51 des renforts 24 (figure 2). La surface verticale 28 présente un rebord horizontal inférieur 43, qui est assemblé par soudure en trois épaisseurs à la plaque horizontale 18 de la pièce de rehausse arrière 14, et au rebord 54b de la traverse centrale arrière 3, de manière à laisser dépasser vers l'arrière une bande 47 de la plaque horizontale 18, par rapport aux deux autres épaisseurs de tôles auxquelles elle est assemblée. Des surfaces verticales latérales 29, prolongeant la surface verticale 28 de la tôle de fermeture 25, mais repliées dans un plan parallèle à l'axe longitudinal du véhicule, ferment la poutre creuse 33 sur les côtés latéraux de celle-ci. Ces surfaces 29 sont assemblées aux rebords verticaux 42 de la pièce 14 de rehausse arrière (visibles sur la figure 2).

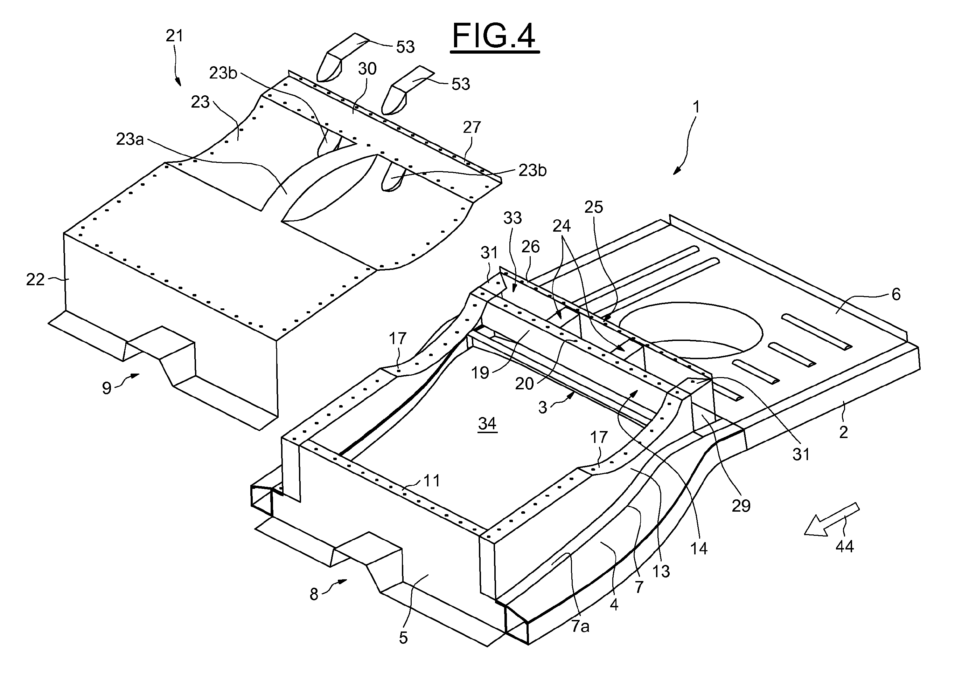

Les bords supérieurs des surfaces verticales 29 et 28 de la tôle de fermeture 25, présentent respectivement des rebords 31 et 26, servant de bandes de soudage et qui peuvent soit être rabattus à l'horizontale, soit rester verticaux. De manière préférentielle, les rebords latéraux 31 sont rabattus à l'horizontale pour être soudés sous la partie support d'assise 21, et le rebord supérieur 26 reste vertical pour être soudé à l'extrémité arrière de la partie support d'assise 21. D'autres configurations de rebords d'assemblage par soudage peuvent bien entendu être envisagées. Par exemple, les rebords latéraux 31 peuvent être remplacés par des bandes verticales s'étendant vers le bas depuis les côtés de la partie arrière 30 de la partie support d'assise 21 visible sur la figure 4.

Une pièce de fixation 53 est assemblée à la partie support d'assise 21 au niveau de chacun des renforts 24. Chaque pièce de fixation 53 comporte une plaque supérieure formant une partie plane 45 placée au niveau d'une face supérieure 49 d'un des renforts 24 au dessus du rebord horizontal 20 de la pièce 14 de rehausse arrière. Chaque plaque supérieure 45 est solidaire d'un corps creux 46 disposé sous elle, soudé sur la face avant de la plaque verticale 19 de la pièce 14 de rehausse arrière.

Chaque pièce de fixation 53 vient en appui sur la face supérieure de la partie arrière 30 de la partie support d'assise 21 (voir figure 4), qui est assemblée sur le dessus de la poutre creuse 33.

Les ferrures de sièges et les pièces d'ancrage des ceintures de sécurité 52, (visibles sur la figure 1) sont assemblées sur une partie des pièces de fixation 53 située en avant de la poutre creuse 33. Les renforts d'ancrage 24 servent à rigidifier la poutre creuse 33, afin d'améliorer la rigidité de la partie support d'assise 21. Ces renforts d'ancrage 24 offrent également un point d'attache particulièrement résistant pour l'ancrage des ceintures de sécurité, ou pour l'assemblage des ferrures de fixation des sièges passagers.

Les pièces de fixation 53, déportées vers l'avant de la poutre creuse 33, permettent de disposer de points d'ancrage suffisamment avancés, selon l'axe longitudinal du véhicule, par rapport à la banquette de siège 55 (visible sur la figure 1). L'assemblage rigide des corps creux 46 et de la poutre creuse 33 améliore encore la rigidité globale de la poutre creuse 33.

La figure 4 est une perspective éclatée d'une partie centrale arrière d'un châssis suivant l'invention. On retrouve sur la figure 4 des éléments communs aux figures précédentes, les mêmes éléments étant alors désignés par les mêmes références. Tel qu'illustré sur la figure 4, le châssis 1 comprend deux longerons 2 reliés par la traverse centrale arrière 3, sur laquelle est assemblée la poutre creuse 33. La plaque de plancher arrière 6 est assemblée sur la partie supérieure des longerons 2 se trouvant à l'arrière de la traverse 3. Cette plaque de plancher arrière 6 est également assemblée à la poutre creuse 33 de manière à venir accoster à la base de cette poutre 33, au voisinage du rebord 54b de la poutre 3 (voir figure 2). En avant de la traverse centrale arrière 3, les longerons 2 supportent chacun sur leur partie supérieure, un renfort latéral de plancher 4. Les renforts latéraux de plancher 4 sont constitués chacun par une tôle emboutie de direction moyenne proche de l'horizontale, s'étendant entre un bord externe et un bord interne du longeron 4 correspondant. Le bord externe de chaque renfort latéral 4 est assemblé au bord externe du longeron correspondant. Le côté interne 7 de chaque renfort latéral de plancher 4 est assemblé, par une ligne de soudure reliant trois épaisseurs de tôle, au bord interne du longeron, et à un bord inférieur d'une pièce de rehausse latérale 13, constituée par une portion de tôle de direction sensiblement verticale.

Un renfort transversal 5 relie les renforts latéraux de plancher 4, en avant et à distance de la traverse centrale arrière 3. Le renfort transversal 5 se présente sous la forme d'une tôle emboutie, de direction sensiblement verticale et transversale à l'axe du véhicule Dans ce renfort transversal 5 est ménagé, en partie centrale inférieure, un passage 8. La hauteur du renfort transversal 5 est telle, que le bord supérieur 11 du renfort transversal 5 peut se trouver, en position assemblée du châssis, sensiblement à la même hauteur que la face supérieure ouverte de la poutre creuse 33. Le renfort transversal 5 et la poutre creuse 33 sont reliés le long de chaque renfort latéral de plancher 4 par des pièces de rehausse latérales 13 disposées de chaque côté.

Le bord supérieur 17 de chaque pièce de rehausse latérale 13 rejoint, à chacune de ses extrémités, le bord supérieur 11 du renfort transversal 5 et la face supérieure de la poutre creuse 33. Entre ces extrémités, le bord supérieur 17 de chaque pièce de rehausse latérale 13 présente une légère concavité. Le renfort transversal 5, les pièces de rehausse latérales 13 et la plaque verticale 19 de la pièce de rehausse arrière 14, délimitent ainsi un logement 34 qui peut être fermé en partie supérieure par la partie support d'assise 21 du plancher. La partie support d'assise 21 du plancher est assemblée par sa périphérie au bord supérieur 11 du renfort transversal 5 et aux bords supérieurs 17 des pièces de rehausse latérales 13, et par la périphérie de sa partie arrière 30, équipée des pièces de fixation 53, aux rebords 20, 26 et 31 de la poutre creuse 33 qui forment des bandes de soudage. Le logement 34 ainsi isolé de l'habitacle des passagers est de ce fait disponible pour recevoir un réservoir d'énergie. La partie support d'assise 21 du plancher comprend, outre la partie arrière 30 venant fermer la poutre creuse 33 et une portion formant couvercle 23 venant fermer la partie supérieure du logement 34, une plaque avant 22, rabattue vers le bas à partir du couvercle 23. La plaque avant 22 est apte à recouvrir le renfort transversal 5 et comprend une zone de passage 9 destinée à venir s'emboîter sur le passage 8 du renfort transversal 5. La portion de couvercle 23 présente une concavité dirigée vers le haut, avec une poutre axiale de renfort 23a. Des zones planes 23b sont prévues sur la portion de couvercle 23, à proximité de la partie arrière 30, pour l'assemblage sur la partie support d'assise 21 des pièces de fixation 53 représentées en position éclatée sur la figure 4.

Par l'agencement décrit sur les figures 1 à 4, on rend disponible sous les sièges passagers arrière, un logement 34 dans lequel peut être disposé un réservoir d'énergie tel qu'un lot de batteries d'accumulateur ou un réservoir de combustible sous pression. La structure proposée permet d'obtenir une structure supportant les sièges, indépendante des bords latéraux de la carrosserie, et convient ainsi aussi bien à un véhicule à trois portes qu'à un véhicule à cinq portes.

L'association de la poutre creuse 33 avec la traverse centrale arrière 3 qui y est assemblée de manière rigide, permet d'obtenir une structure de poutre transversale présentant un module de flexion élevé pour une faible consommation de matière. L'ajout des caissons de renfort 24 améliore la raideur en torsion de la poutre, et, sans consommation de matière supplémentaire, contribue à offrir des points d'ancrage particulièrement résistants pour les ferrures d'attaches de sièges et pour les pièces d'ancrage de ceintures de sécurité.

## Revendications

1. Châssis (1) de véhicule automobile comportant une traverse centrale arrière (3), une poutre creuse (33) disposée par-dessus la traverse centrale arrière (3) le long de cette traverse centrale arrière, et une partie support d'assise (21) de plancher munie de ferrures de sièges arrières, supportée à l'arrière par la poutre creuse (33) placée sous la partie support d'assise, ladite poutre (33) comportant une pièce de rehausse arrière (14) comprenant une plaque horizontale (18) fixée sur la traverse centrale arrière (3), ladite poutre (33) comportant en outre une tôle de fermeture (25) fixée sur la plaque horizontale (18) de la pièce de rehausse arrière (14) et comportant au moins un renfort d'ancrage (24) assemblé à l'intérieur de la poutre creuse (33), ledit renfort formant un caisson creux reliant la pièce de rehausse arrière (14) et la tôle de fermeture (25), une face supérieure (49) du renfort d'ancrage (24) supportant une pièce de fixation (53) assemblée à la partie support d'assise (21), ladite pièce de fixation étant en outre assemblée, du côté extérieur de la poutre creuse (33), à la pièce de rehausse arrière (14) et une desdites ferrures de siège arrière étant ancrée sur ladite pièce de fixation (53) solidaire du renfort d'ancrage (24).

2. Châssis de véhicule automobile selon la revendication 1, dans lequel la face supérieure (49) du renfort d'ancrage (24) affleure au voisinage de la partie support d'assise (21) de plancher.

3. Châssis de véhicule automobile selon la revendication 2, dans lequel le caisson creux est délimité par une face appartenant à la tôle de fermeture (25), par deux faces appartenant à la pièce de rehausse arrière (14), et par trois faces formées par une tôle (50) pliée en U assemblée à l'intérieur de la poutre creuse (33).

4. Châssis de véhicule automobile selon la revendication précédente, comportant au moins deux renforts d'ancrage (24), et dans lequel des pièces d'ancrage de ceintures de sécurité sont ancrées sur les pièces de fixation (53).

5. Châssis de véhicule selon l'une des revendications précédentes, chaque pièce de fixation (53) comportant un volume creux (46) assemblé sur la face extérieure de la pièce de rehausse arrière (14), et se prolongeant par une portée plane (45) assemblée à une partie arrière (30) de la partie support d'assise (21) au niveau d'un renfort d'ancrage (24).

6. Châssis de véhicule automobile selon l'une des revendications précédentes, dans lequel la tôle de fermeture (25) comporte une surface verticale (28) parallèle à une plaque verticale (19) de la pièce de rehausse arrière (14), et deux surfaces verticales latérales (29) repliées à partir de la surface verticale (28) et assemblées à la plaque verticale (19) de la pièce de rehausse arrière (14) le long des côtés de celle-ci.

7. Châssis de véhicule selon l'une des revendications précédentes, comportant deux longerons (2) reliés par la traverse centrale arrière (3) et recouverts à l'avant de ladite traverse (3), par des renforts latéraux de plancher (4), sur lesquels renforts latéraux (4) est fixé un renfort transversal (5) et sur lesquels renforts latéraux (4) sont fixées deux pièces de rehausse latérales (13), la partie support d'assise (21) du plancher étant fixée par-dessus les deux pièces de rehausse latérales (13), la pièce de rehausse arrière précitée (14) et le renfort transversal (5), de façon à créer sous la partie support d'assise (21) du plancher, un logement (34) pour un réservoir d'énergie.

8. Châssis de véhicule automobile selon la revendication précédente, dans lequel une bande (47) de la plaque horizontale (18) de la pièce de rehausse arrière (14) dépasse vers l'arrière du véhicule par rapport à la tôle de fermeture (25) et par rapport à la traverse centrale arrière (3).

9. Châssis de véhicule automobile selon la revendication précédente, dans lequel la pièce de rehausse arrière (14) et le renfort transversal (5) s'étendent uniquement entre les côtés internes (7) des deux renforts latéraux (4) de plancher.

## Patentansprüche

1. Kraftfahrzeugchassis (1), das einen hinteren mittleren Querträger (3), einen Hohlbalken (33), der über dem mittleren hinteren Querträger (3) entlang dieses mittleren hinteren Querträgers angeordnet ist, und einen mit Beschlägen von Rücksitzen versehenen Boden-Sitzflächenträgerteil (21) aufweist, der hinten vom unter dem Sitzflächenträgerteil angeordneten Hohlbalken (33) getragen wird, wobei der Balken (33) ein hinteres Aufsatzbauteil (14) aufweist, das eine am mittleren hinteren Querträger (3) befestigte waagrechte Platte (18) enthält, wobei der Balken (33) außerdem ein Schließblech (25) aufweist, das an der waagrechten Platte (18) des hinteren Aufsatzbauteils (14) befestigt ist und mindestens eine Verankerungsverstärkung (24) aufweist, die im Inneren des Hohlbalkens (33) montiert ist, wobei die Verstärkung einen Hohlkasten bildet, der das hintere Aufsatzbauteil (14) und das Schließblech (25) verbindet, wobei eine Oberseite (49) der Verankerungsverstärkung (24) ein Befestigungsbauteil (53) trägt, das an den Sitzflächenträgerteil (21) montiert ist, wobei das Befestigungsbauteil außerdem an der Außenseite des Hohlbalkens (33) an das hintere Aufsatzbauteil (14) montiert ist, und einer der Rücksitzbeschläge am fest mit der Verankerungsverstärkung (24) verbundenen Befestigungsbauteil (53) verankert ist.

2. Kraftfahrzeugchassis nach Anspruch 1, wobei die Oberseite (49) der Verankerungsverstärkung (24) in der Nähe des Boden-Sitzflächenträgerteils (21) bündig anliegt.

3. Kraftfahrzeugchassis nach Anspruch 2, wobei der Hohlkasten von einer zum Schließblech (25) gehörenden Seite, von zwei zum hinteren Aufsatzbauteil (14) gehörenden Seiten und von drei Seiten begrenzt wird, die von einem U-förmig gebogenen Blech (50) gebildet werden, das im Inneren des Hohlbalkens (33) montiert ist.

4. Kraftfahrzeugchassis nach dem vorhergehenden Anspruch, das mindestens zwei Verankerungsverstärkungen (24) aufweist, und wobei Sicherheitsgurt-Verankerungsbauteile auf den Befestigungsbauteilen (53) verankert sind.

5. Fahrzeugchassis nach einem der vorhergehenden Ansprüche, wobei jedes Befestigungsbauteil (53) einen Hohlraum (46) aufweist, der an der Außenseite des hinteren Aufsatzbauteils (14) montiert ist, und sich durch eine ebene Auflagefläche (45) verlängert, die an einen hinteren Teil (30) des Sitzflächenträgerteils (21) im Bereich einer Verankerungsverstärkung (24) montiert ist.

6. Kraftfahrzeugchassis nach einem der vorhergehenden Ansprüche, wobei das Schließblech (25) eine senkrechte Fläche (28) parallel zu einer senkrechten Platte (19) des hinteren Aufsatzbauteils (14) und zwei senkrechte Seitenflächen (29) aufweist, die ausgehend von der senkrechten Fläche (28) umgebogen und an die senkrechte Platte (19) des hinteren Aufsatzbauteils (14) entlang von dessen Seiten montiert sind.

7. Fahrzeugchassis nach einem der vorhergehenden Ansprüche, das zwei Längsträger (2) aufweist, die durch den mittleren hinteren Querträger (3) verbunden und vor dem Querträger (3) von Boden-Seitenverstärkungen (4) bedeckt werden, an welchen Seitenverstärkungen (4) eine Querverstärkung (5) befestigt ist, und auf welchen Seitenverstärkungen (4) zwei seitliche Aufsatzbauteile (13) befestigt sind, wobei der Sitzflächenträgerteil (21) des Bodens über den zwei Seitenaufsatzbauteilen (13), dem erwähnten hinteren Aufsatzbauteil (14) und der Querverstärkung (5) befestigt ist, um unter dem Sitzflächenträgerteil (21) des Bodens eine Aufnahme (34) für einen Energiespeicher zu erzeugen.

8. Kraftfahrzeugchassis nach dem vorhergehenden Anspruch, wobei ein Streifen (47) der waagrechten Platte (18) des hinteren Aufsatzbauteils (14) zur Rückseite des Fahrzeugs bezüglich des Schließblechs (25) und bezüglich des mittleren hinteren Querträgers (3) übersteht.

9. Kraftfahrzeugchassis nach dem vorhergehenden Anspruch, wobei das hintere Aufsatzbauteil (14) und die Querverstärkung (5) sich nur zwischen den Innenseiten (7) der zwei Boden-Seitenverstärkungen (4) erstrecken.

## Claims

1. Motor vehicle chassis (1) comprising a rear central crossmember (3), a hollow beam (33) arranged above the rear central crossmember (3) along said rear central crossmember, and a floor seat-cushion support part (21) provided with rear seat fittings, supported to the rear by the hollow beam (33) positioned under the seat-cushion support part, said beam (33) comprising a rear raising part (14) comprising a horizontal plate (18) fixed to the rear central crossmember (3), said beam (33) further comprising a blanking sheet (25) fixed to the horizontal plate (18) of the rear raising part (14) and comprising at least one anchoring reinforcement (24) assembled inside the hollow beam (33), said reinforcement forming a hollow box structure connecting the rear raising part (14) and the blanking sheet (25), an upper face (49) of the anchoring reinforcement (24) supporting a mounting part (53) assembled to the seat-cushion support part (21), said mounting part being also assembled on the outside of the hollow beam (33) to the rear raising part (14) and one of said rear seat fittings being anchored to said mounting part (53) fixed to the anchoring reinforcement (24).

2. Motor vehicle chassis according to Claim 1, in which the upper face (49) of the anchoring reinforcement (24) is made flush in the vicinity of the floor seat-cushion support part (21).

3. Motor vehicle chassis according to Claim 2, in which the hollow box structure is delimited by a face forming part of the blanking sheet (25), by two faces forming part of the rear raising part (14) and by three faces formed by a sheet (50) folded in a U-shape assembled inside the hollow beam (33).

4. Motor vehicle chassis according to the preceding claim, comprising at least two anchoring reinforcements (24), and in which the anchoring parts for seat belts are anchored to the mounting parts (53).

5. Motor vehicle chassis according to one of the preceding claims, each mounting part (53) comprising a hollow volume (46) assembled to the external face of the rear raising part (14) and extended by a planar bearing surface (45) assembled to a rear part (30) of the seat-cushion support part (21) in the region of an anchoring reinforcement (24).

6. Motor vehicle chassis according to one of the preceding claims, in which the blanking sheet (25) comprises a vertical surface (28) parallel to a vertical plate (19) of the rear raising part (14), and two lateral vertical surfaces (29) folded back from the vertical surface (28) and assembled to the vertical plate (19) of the rear raising part (14), along the sides thereof.

7. Motor vehicle chassis according to one of the preceding claims, comprising two longitudinal members (2) connected by the rear central crossmember (3) and covered at the front of said crossmember (3) by lateral floor reinforcements (4), a transverse reinforcement (5) being fixed to the lateral reinforcements (4) and two lateral raising parts (13) being fixed to the lateral reinforcements (4), the seat-cushion support part (21) of the floor being fixed above the two lateral raising parts (13), the aforementioned rear raising part (14) and the transverse reinforcement (5) so as to create a housing (34) for an energy storage tank below the seat-cushion support part (21) of the floor.

8. Motor vehicle chassis according to the preceding claim, in which a strip (47) of the horizontal plate (18) of the rear raising part (14) protrudes beyond the rear of the vehicle relative to the blanking sheet (25) and relative to the rear central crossmember (3).

9. Motor vehicle chassis according to the preceding claim, in which the rear raising part (14) and the transverse reinforcement (5) extend solely between the internal sides (7) of the two lateral floor reinforcements (4).
